# EUROPEAN PATENT SPECIFICATION

(11) **EP 0 607 037 B1**
(45) Date of publication and mention of the grant of the patent: **02.04.1997**
(21) Application number: 94300218.8
(22) Date of filing: 12.01.1994
(51) Int. Cl.: H04Q 7/18

(54) **Radio paging receiver**
Personenrufempfänger
Récepteur d'appel radio

(30) Priority: 12.01.1993 JP 2985/93
(43) Date of publication of application: 20.07.1994
(73) Proprietor: NEC CORPORATION, Tokyo (JP)
(72) Inventor: Matai, Masahiro, Minato-ku, Tokyo (JP); Kuramatsu, Hiroyasu, Minato-ku, Tokyo (JP)
(74) Representative: Moir, Michael Christopher

(56) References cited:
- WO-A-90/10360
- WO-A-91/19358
- US-A- 4 652 875
- PATENT ABSTRACTS OF JAPAN vol. 16, no. 215 (E-1204) 20 May 1992 & JP-A-04 035 537 (FUJITSU LTD)

## Description

### BACKGROUND OF THE INVENTION

### 1. Field of the Invention

The present invention relates to a radio paging receiver, and more particularly to a radio paging receiver capable of reducing power consumption from a battery power supply.

### 2. Description of the Prior Art

Wide use is made of a selective call radio receiver a so-called a radio paging receiver (hereinafter simply referred to as a pager) in which once a peculiar selective calling number is dialled through a telephone set to the pager, a carrier of the pager is informed of the calling with a ringing sound.

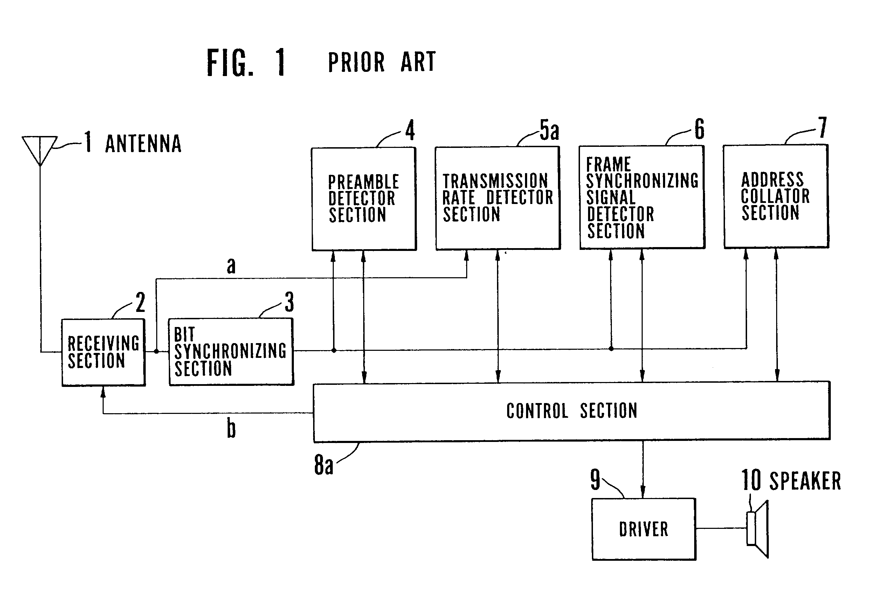

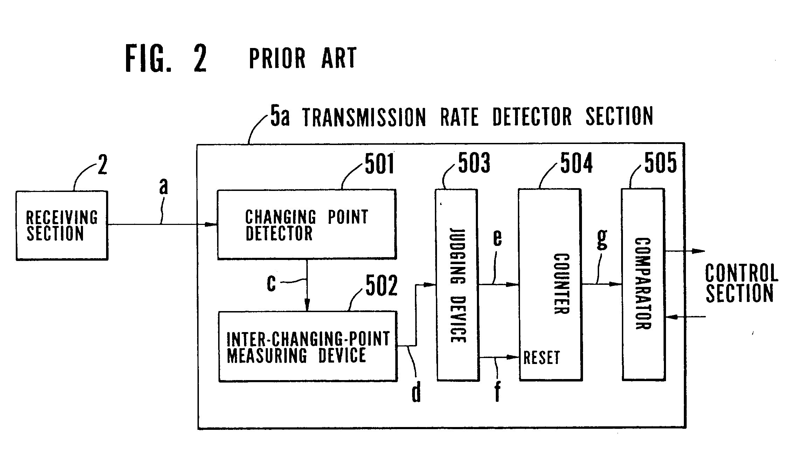

Referring to FIGs. 1 and 2, there are illustrated in the form of a block diagram a prior art pager, and a transmission rate detector section shown in FIG. 1 and Fig. 2 respectively, in an exemplified manner.

As understood from FIG. 1, in the prior art pager, a radio signal received by an antenna 1 is amplified and demodulated in a receiving section 2, and is transmitted as a digital signal to a bit synchronizing section 3.

The received digital signal is synchronized with an internal reference clock in the bit synchronizing section 3 to take out a regenerated clock from the digital signal. The digital signal in bit synchronization is sent to a preamble detector section 4 for detection of its preamble. The result of the preamble detection, ie. the presence or absence of the preamble is fed to a control section 8a.

The control section 8a judges based upon the presence of the preamble whether or not a received signal is present, and upon reception of no signal it causes power to be supplied only intermittently to the receiving section 2.

In contrast, with a preamble detected, the control section 8a controls the power supply such that power is continuously supplied to the receiving section 2, and operates a frame synchronizing signal detector section 6. Once a frame synchronizing signal is detected by the frame synchronizing signal detector section 6, the control section 8a controls the power supply to the receiving section 2 such that power is supplied only between self-frames, and operates an address collator section 7.

The address collator section 7 compares an address number peculiar to the pager which is stored therein, with an address number contained in the received signal and, upon coincidence therebetween, controls a speaker 10 through a driver 9 to generate a ringing sound and hence inform a carrier of the pager of the call.

In the case where the operation is put out of synchronization in the middle of a calling signal owing to a change in signal strength (fading), say at the Nth batch of the calling signal, no preamble is detected, so that the operation is not again brought into synchronization in the middle of the calling signal and hence the signal on and after the (N+1) batch fails to be received.

A measure is herein taken wherein even without the detection of the preamble a transmission rate detector section 5a detects the transmission rate of a received signal. Then, when it is judged on the basis of the detected transmission rate that a signal is being received and that it is not just noise but is in fact a calling signal, the synchronization is recovered even in the middle of the calling signal. This is called intermediate synchronization.

As shown in FIG. 2, the transmission rate detector part 5a connected with the receiving section 2 comprises a changing point detector 501, an inter-changing-point measuring device 502, a judging device 503, a counter 504, and a comparator 505.

The inter-changing-point distance measuring device 502 is adapted to measure a distance between two adjacent changing points of a digital signal delivered from the receiving section 2, which devices comprise a counter and is supplied with power when a starting signal "b" is of high level.

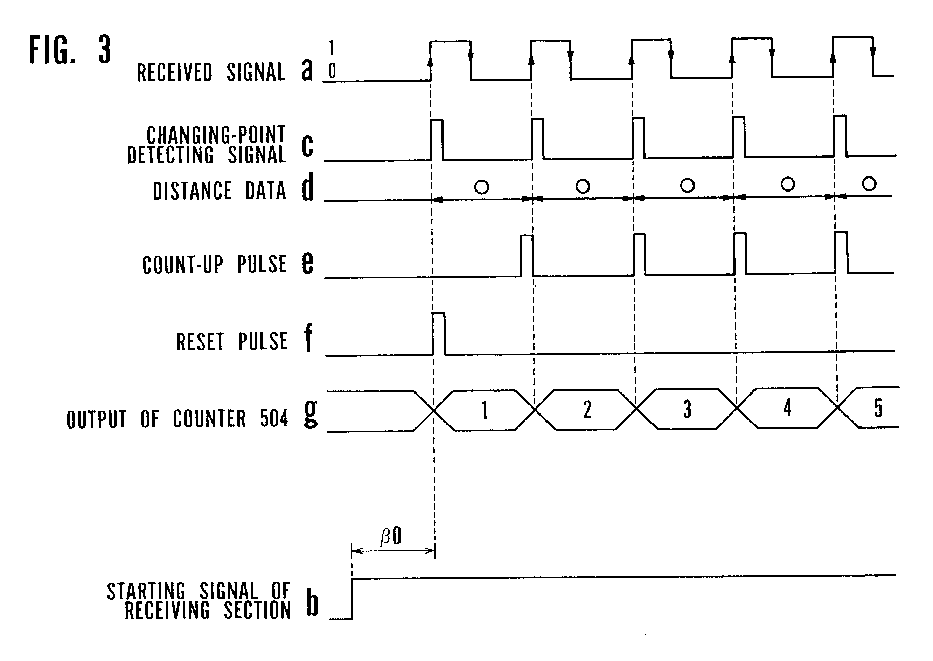

Referring to FIG. 3, there are illustrated output waveforms from the respective sections illustrated in FIG. 2 in the case where a signal of a transmission rate allocated to the paging receiver is received.

The signal "a" outputted from the receiving section 2 allows the changing-point detector 501 to issue a changing-point pulse "c" at a changing point of the signal "a" from "0" to "1", which pulse "c" is fed to the interchanging-point distance measuring device 502. The interchanging-point distance measuring device 502 successively measures distances between two changing points of the changing point pulse "c" inputted thereinto, and transmits distance data "d" to the judging device 503.

The judging device 503 judges whether or not the measured distance data "d" falls within the range of integer times +α (α is a value previously set in match with the characteristics of the receiving section 2) of a unit bit length of the transmission signal of itself. That is to say, the judging device 503 judges whether the distance "d" is an integral multiple of α times the unit bit length. As a result of the judgement, if the distance data "d" falls within the just-mentioned range (ie. is said integral multiple α), then a count-up pulse "e" is issued to the counter 504 while if it is outside the just-mentioned range, then a reset pulse "f" is issued to the same.

The comparator 505 compares an output from the counter 504 with a preset reference value, and if the counter output "g" exceeds the reference value, then the comparator 505 judges that the signal being received has the transmission rate which is peculiar to the pager and alters the power supply from a battery saving mode to a next frame synchronizing signal collation mode. It is herein noted that the received signal "a" is outputted, delayed by the operation time β 0 of a transmission line after the receiving section 2 is supplied with the power owing to the starting signal "b".

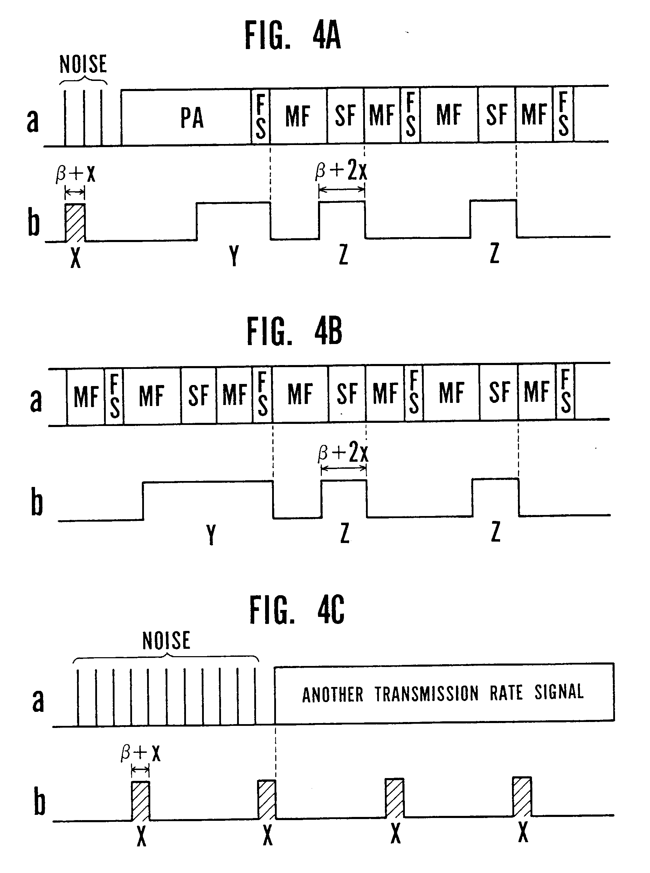

Referring to FIGs. 4A to 4C, there are illustrated the timing relationships between the received signal and the power supply to the receiving section 2, FIG. 4A indicates a case where the transmission signal of the paging receiver itself is received based upon the preamble, FIG. 4B a case where the same transmission signal is synchronized in the middle thereof, and FIG. 4C a case where noise and another transmission rate signal are received.

In FIGs. 4A to 4C, designated at PA is a preamble, FS is a frame synchronization, SF is a self-frame, MF is another frame, X is a preamble searching portion, Y is a frame synchronization searching portion, and Z is an address searching portion.

The time required for supplying power to the receiving section 2 is the sum (β +x) of one code word x (32 bits) and rise delay time β of the receiving section 2. The frame synchronization search time is that interval from the preamble searching to the time when the frame synchronization is detected, and the address searching time is the sum (β +2x) of 2 code words 2x (64 bits) and the rise delay time β.

The rise time delay is set to a value greater than the operation time β 0 of the transmission line as illustrated in FIG. 3, ie. β > β 0.

The prior art pager, however, suffers from the disadvantages that the power supply time is as long as the preamble searching time as illustrated in FIG. 4C, even when no signal is received, and that when the received signal includes noise as data as illustrated in FIG. 4A or that the received signal has another transmission rate, current consumption is increased at the shaded portions illustrated in FIGs. 4A and 4C.

WO-A-90/10360 discloses a radio paging receiver comprising:
a receiving section for receiving a carrier modulated with a paging signal and demodulating said paging signal as a digital signal;
a transmission rate detector section for detecting the transmission rate of the received signal;
a control section for controlling the supply of power to said receiver section;
said paging receiver further comprising time measuring means for measuring the time for which the power is supplied to said receiving section;
said control section starting operation of said transmission rate detector section when said time measuring means measures a predetermined said time.

### SUMMARY OF THE INVENTION

To seek to reduce the disadvantages of the prior art, it is an object of the present invention to provide a paging receiver with reduced power consumption.

This object may be achieved by detecting a transmission rate of a received signal when a predetermined time has elapsed since power supply to a receiving section commenced and synchronizing a received signal in the middle of the same when it is judged that the received signal is of a self-transmission rate while interrupting the power supply to the receiving section when it is judged that the received signal is not of the self-transmission rate.

Thus, the invention provides a radio paging receiver comprising:
a receiving section for receiving a carrier modulated with a paging signal and demodulating said paging signal as a digital signal;
a transmission rate detector section for detecting the transmission rate of the received signal;
a control section for controlling the supply of power to said receiver section and said transmission rate detector section;
time measuring means for measuring the time for which the power is supplied to said receiving section, said control section starting operation of said transmission rate detector section when said time measuring means measures a predetermined said time, and synchronizing the received signal at an intermediate portion thereof when said transmission rate detector section judges that the transmission rate of the received signal is a transmission rate allocated to the receiver;
said transmission rate detector section comprising an inter-changing point measuring means for measuring the interval between two adjacent changing points of the digital signal from a first logical level to a second logical level and judging means for interrupting the power supply to said receiving section when said interval is inconsistent with the received signal transmission rate allocated to the receiver.

In accordance with one preferred embodiment of the present invention, a paging receiver comprises a receiving section for receiving a carrier modulated by a paging signal and demodulating the same as a digital signal; a transmission rate detector section; and a control section, said transmission detector section comprising a changing-point detector detecting a changing point of the demodulated digital signal from a first logical level to a second logical level; an inter-changing-point distance measuring device for successively measuring distances between the detected changing points; a judging device for judging whether or not the measured distance is an integral multiple of the unit bit length of the transmission signal; a counter which is reset when an output from said judging device is judged not to be said integral multiple; and a comparator for comparing the output from said counter with a set value to judge whether or not the received signal is of the transmission rate peculiar thereto, and said said control section comprising a timer section for counting the time since the power supply from a battery is started in the paging receiver wherein there is performed battery saving control to said transmission rate detector section and said receiving section, whereby said control section operates said tranmsmission rate detector section at the time a predetermined time elapsed since the starting of said battery saving and interrupts the power supply from said battery when a different transmission rate is detected thereafter from the received signal.

Furthermore, a noise detector means may be provided for detecting any noise in the received signal after said transmission rate detector section is operated and the control section interrupts the power supply from the battery upon detection of the noise.

The above and other objects, features and advantages of the invention will become more apparent from the following description when taken in conjunction with the accompanying drawings.

### BRIEF DESCRIPTION OF THE DRAWINGS

FIG. 1 is a block diagram exemplarily illustrating a prior art paging receiver;
FIG. 2 is a block diagram illustrating a transmission rate detector section illustrated in FIG. 1;
FIG. 3 shows output signal waveforms from respective sections illustrated in FIG. 2 when a self-transmission rate signal is received;
FIG. 4A shows the timing between a received signal and power supply to a receiving section when a self-transmission rate signal is received on the basis of a preamble;
FIG. 4B shows the timing between the received signal and the power supply to the receiving section in the case where the self-transmission rate signal is synchronized in the middle thereof;
FIG. 4C shows the timing between the received signal and the power supply to the receiving section when any noise is received and another transmission rate signal is received.
FIG. 5 is a block diagram illustrating a preferred embodiment of a paging receiver according to the present invention;
FIG. 6 is a circuit diagram exemplarily illustrating a transmission rate detector section of the receiver of FIG. 5;
FIG. 7 shows waveforms of respective sections when a different transmission rate signal is inputted to the transmission rate detector section in FIG. 6;
FIG. 8 shows waveforms of the respective sections when a self-transmission transmission rate signal is inputted to the transmission rate detector section in FIG. 6; and
FIG. 9 is a timing chart of the power supply to the receiving section when another signal is received.

### DETAILED DESCRIPTION OF THE PREFERRED EMBODIMENT

In the following, there will be described by way of example only an embodiment of the present invention with reference to the accompanying drawings.

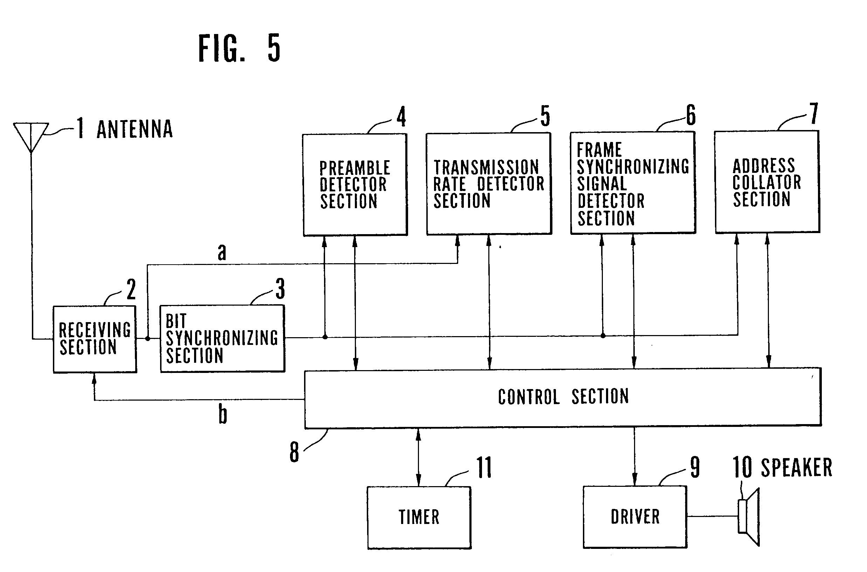

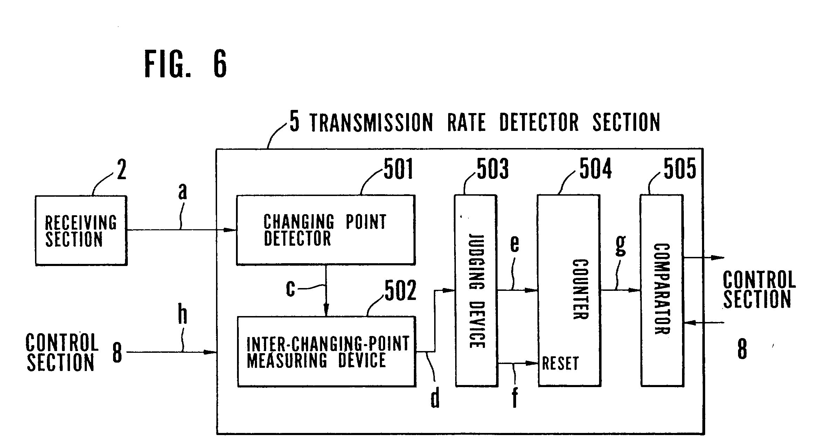

Referring to FIGs. 5 and 6, there are exemplarily illustrated in the form of a block diagram, a preferred embodiment of a paging receiver according to the present invention and a transmission rate detector section.

The present embodiment is adapted to include a timer section 11 in addition to the construction of the prior art paging receiver illustrated in FIG. 1.

The timer section 11 starts counting as it receives a power supply starting signal from the control section 8, and transmits a signal to the transmission rate detector section 5 through the control section 8 for initiation of transmission rate detection when the rise delay time of the receiving section 2 has elapsed.

The control section 8 and a transmission rate detector section 5 correspond to the control section 8a and the transmission rate detector section 5a in FIG. 1, respectively, with the former construction and operation being identical to those of the latter illstrated in Fig. 1. The construction and operation of other sections are identical to those of the prior art example illustrated in FIG. 1.

As illustrated in FIG. 6 the transmission rate detector section 5 in the present embodiment receives a signal from a timer section 11 through the control section 8 for activation thereof.

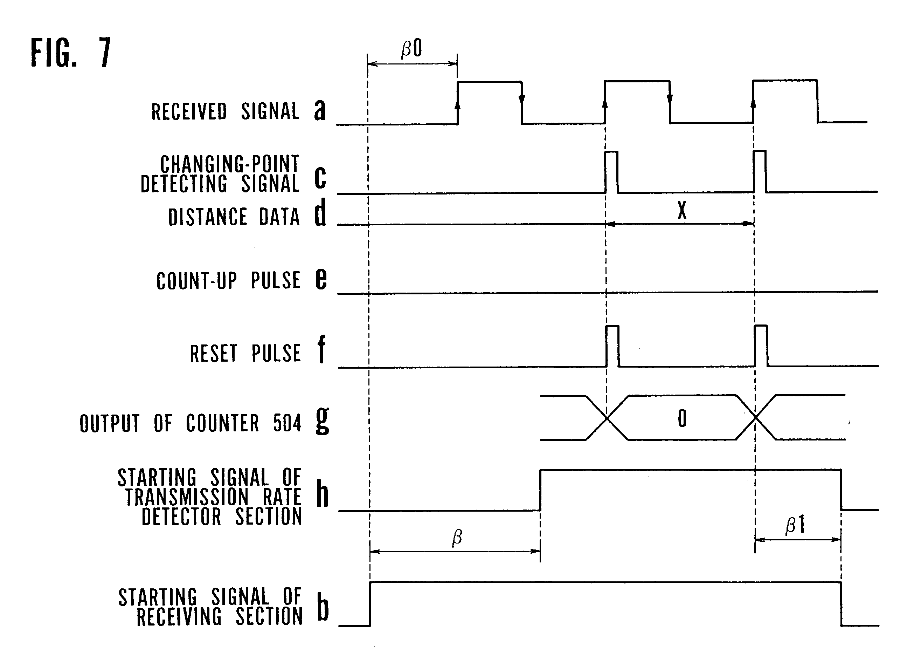

Referring to FIG. 7, there are illustrated waveforms at respective portions of the transmission rate detector section 5 when a signal having another transmission rate is inputted into the transmission rate detector section 5 illustrated in FIG. 6.

The timer 11 starts counting after a signal "b" to the receiving section 2 becomes a high level, and the tranmission rate detector section 5 is started with a starting signal "h", delayed by a rise delay time β. The changing-point detector 501 detects changing points of the signal "a", and delivers a changing-point detection signal "c".

Once distance "d" between two adjacent changing points is inputted from the inter-changing-point measuring device 502 into the judging device 503, the judging device 503 issues two reset pulses "f' to the counter 504 when the transmission rate of the received signal is outside the range of integer times +α of the self-transmission rate, ie. is other than an integral multiple a of that rate. The counter 504 changes the output "g" to "0" which is then transmitted to the comparator 505 to inform the control section 8 of the fact that the received signal is not the self-transmission rate signal.

As a result, the control section 8 recognizes that the signal now being received has a different rate, and interrupts the power supply to the receiving section. Any noise provides random signal distances "d" so that the output "g" from the counter 504 is "0" to inform a carrier of a fact that the received signal is not a self-signal. More specifically, the transmission rate detector section 5 of the present invention thus functions to detect noise.

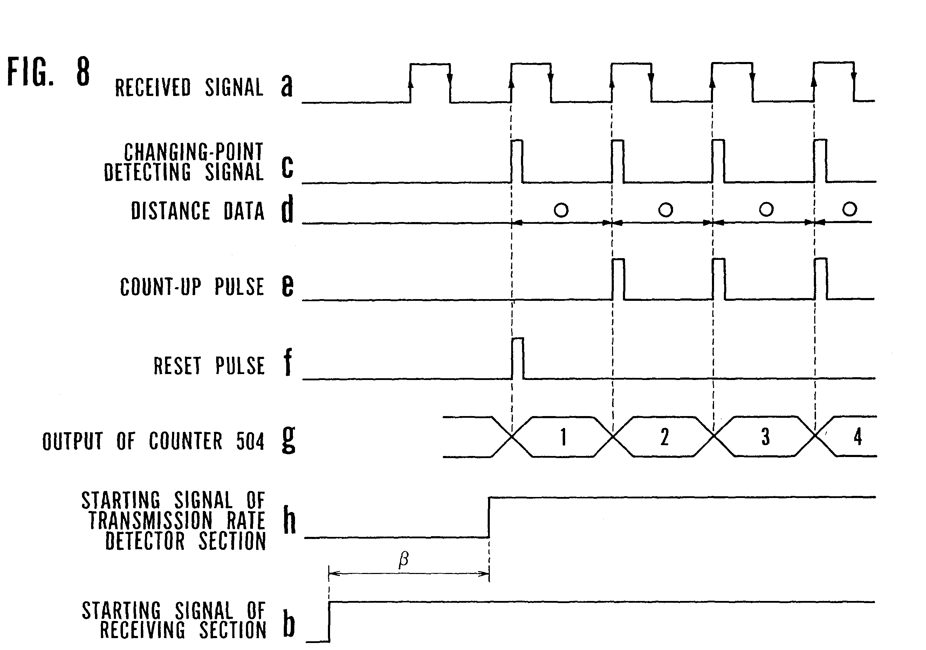

Referring to FIG. 8, there are illustrated waveforms of the respective portions of the transmission rate detector section 5 when the self-transmission rate signal is inputted into the transmission rate detector section 5 illustrated in FIG. 6. After the transmission rate detection 5 is operated with the starting signal "h", it synchronizes the received signal in the middle of (ie. intermediate the extent of) the same following the same operation as described in the prior art example.

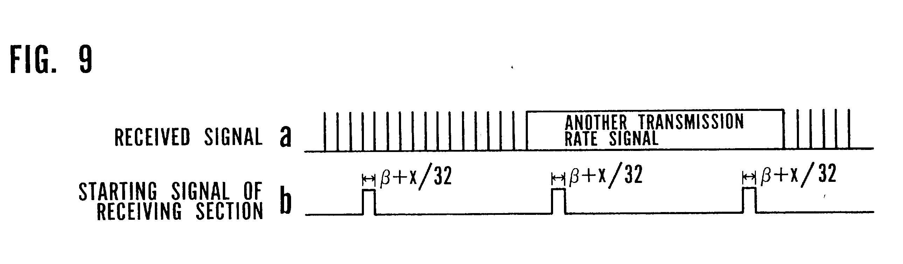

Referring to FIG. 9, there is illustrated a timing chart of the power supply to the receiving section 2 when another signal is received.

Initial rise time is provided by {β + (x/32)+ β 1} which is considerably smaller than the rise time (β +x) in the prior art receiver. It is herein noted that there is smaller response time β1 (illustrated in FIG. 7) from the time when the received signal is judged not to be of the self-transmission rate to the time when the power supply is interrupted.

According to the present invention, as described above, the power supply to the receiving section is interrupted when the transmission rate of a received signal is judged not to be of self-transmission rate or to be a noise signal. Thus, the efficiency of the battery saving is improved, current consumption is therefore reduced to increase the battery life.

## Claims

1. A radio paging receiver comprising:
a receiving section (2) for receiving a carrier modulated with a paging signal and demodulating said paging signal as a digital signal;
a transmission rate detector section (5) for detecting the transmission rate of the received signal;
a control section (8) for controlling the supply of power to said receiver section (2) and said transmission rate detector section (15);
time measuring means (11) for measuring the time for which the power is supplied to said receiving section (2), said control section (8) starting operation of said transmission rate detector section when said time measuring means (11) measures a predetermined said time, and synchronizing the received signal at an intermediate portion thereof when said transmission rate detector section judges that the transmission rate of the received signal is a transmission rate allocated to the receiver;
said transmission rate detector section (5) comprising an inter-changing point measuring means (501,502) for measuring the interval between two adjacent changing points of the digital signal from a first logical level to a second logical level and judging means (503) for interrupting the power supply to said receiving section when said interval is inconsistent with the received signal transmission rate allocated to the receiver.

2. A paging receiver according to Claim 1, wherein said judging means comprises:
a judging device (503) for judging whether or not the measured inter-changing-point interval is an integral multiple of the unit bit length of a transmission signal;
a counter (504) which counts when said judging device (503) judges that the inter-changing-point interval is a predetermined integral multiple of the unit bit length of the transmission signal but is reset when the same is judged not to be a predetermined integral multiple; and
a comparator (505) for comparing the value counted by the counter (504) with a set value to judge whether or not the received signal is of the allocated transmission rate.

3. A paging receiver according to Claim 2, wherein said transmission rate detector section has a noise detection function, and said control section interrupts the power supply when said transmission rate detector sections detects noise.

## Patentansprüche

1. Radiopersonenrufempfänger, der aufweist:
einen Empfängerabschnitt (2) zum Empfangen eines Trägers, der mit einem Personenrufsignal moduliert ist, und zum Demodulieren dieses Personenrufsignals als ein Digitalsignal;
einen Detektorabschnitt (5) für die Übertragungsrate zum Detektieren der Übertragungsrate des empfangenen Signals;
einen Steuerabschnitt (8) zum Steuern der Zuführung von Leistung zu dem Empfängerabschnitt (2) und dem Detektorabschnitt (15) für die Übertragungsrate;
Zeitmeßmittel (11) zum Messen der Zeit, während der die Leistung dem Empfangsabschnitt (2) zugeführt wird, wobei der Steuerabschnitt (8) den Betrieb des Detektorabschnitts für die Übertragungsrate startet, wenn das Zeitmeßmittel (11) eine solche vorbestimmte Zeit mißt, und das empfangene Signal bei einem Zwischenteil desselben synchronisiert, wenn der Detektorabschnitt für die Übertragungsrate feststellt, daß die Übertragungsrate des empfangenen Signals eine Übertragungsrate ist, die dem Empfänger zugeteilt ist;
wobei der Detektorabschnitt (5) für die Übertragungsrate Meßmittel (501,502) für einen Wechselpunkt zum Messen des Intervalls zwischen zwei benachbarten Wechselpunkten des Digitalsignals von einem ersten logischen Pegel auf einen zweiten logischen Pegel und Beurteilungsmittel (503) zum Unterbrechen der Leistungszufuhr zu dem Empfängerabschnitt, wenn dieses Intervall inkonsistent mit der empfangenen Signalübertragungsrate ist, die dem Empfänger zugeteilt ist.

2. Personenrufempfänger nach Anspruch 1, dadurch gekennzeichnet, daß das Beurteilungsmittel aufweist:
eine Beurteilungseinrichtung (503) zum Beurteilen, ob das gemessene Wechselpunktintervall ein ganzzahliges Vielfaches der Einheitsbitlänge eines Übertragungssignals ist oder nicht;
einen Zähler (504), der zählt, wenn die Beurteilungseinrichtung (503) feststellt, daß das Wechselpunktintervall ein vorbestimmtes ganzzahliges Vielfaches der Einheitsbitlänge des Übertragungssignals ist, aber zurückgesetzt wird, wenn festgestellt wird, daß dasselbe kein vorbestimmtes ganzzahliges Vielfaches ist; und
einen Komparator (505) zum Vergleichen des Werts, der durch den Zähler (504) gezählt ist, mit einem eingestellten Wert, um zu beurteilen, ob das empfangene Signal die zugeteilte Übertragungsrate hat oder nicht.

3. Personenrufempfänger nach Anspruch 2, dadurch gekennzeichnet, daß der Detektorabschnitt für die Übertragungsrate eine Rauschdetektionsfunktion hat, und wobei der Steuerabschnitt die Leistungszufuhr unterbricht, wenn der Detektorabschnitt für die Übertragungsrate Rauschen feststellt.

## Revendications

1. Récepteur d'appel radio comprenant :
une section de réception (2) destinée à recevoir une porteuse modulée avec un signal d'appel et démoduler ledit signal d'appel en signal numérique ;
une section de détection (5) de la vitesse de transmission destinée à détecter la vitesse de transmission du signal reçu ;
une section de commande (8) destinée à commander l'alimentation en courant de ladite section de réception (2) et de ladite section de détection (5) de la vitesse de transmission ;
des moyens de mesure temporelle (11) destinés à mesurer le temps pendant lequel le courant est appliqué à ladite section de réception (2), ladite section de commande (8) commençant le fonctionnement de ladite section de détection de la vitesse de transmission lorsque lesdits moyens de mesure temporelle (11) mesurent ledit temps prédéterminé, et à synchroniser le signal reçu au niveau d'une partie intermédiaire de ceux-ci lorsque ladite section de détection de la vitesse de transmission estime que la vitesse de transmission du signal reçu est une vitesse de transmission allouée au récepteur ;
ladite section de détection (5) de la vitesse de transmission comprenant des moyens de mesure de points (501, 502) interchangeants destinés à mesurer l'intervalle entre deux points changeants adjacents du signal numérique d'un premier niveau logique à un second niveau logique et des moyens d'estimation (503) destinés à interrompre l'alimentation en courant de ladite section de réception lorsque ledit intervalle n'est pas compatible avec la vitesse de transmission de signal reçue allouée au récepteur.

2. Récepteur d'appel selon la revendication 1, dans lequel lesdits moyens d'estimation comprennent :
un dispositif d'estimation (503) destiné à estimer si oui ou non l'intervalle de points interchangeants est un multiple entier de la longueur de bits unités d'un signal de transmission ;
un compteur (504) qui compte lorsque ledit dispositif d'estimation (503) estime que l'intervalle de points interchangeants est un multiple entier de la longueur de bits unités du signal de transmission mais est remis à zéro lorsque celui-ci est estimé ne pas être un multiple entier prédéterminé ; et
un comparateur (505) destiné à comparer la valeur comptée par le compteur (504) avec une valeur déterminée pour estimer si oui ou non le signal reçu A la vitesse de transmission allouée.

3. Récepteur d'appel selon la revendication 2, dans lequel ladite section de détection de la vitesse de transmission a une fonction de détection du bruit, et ladite section de commande interrompt l'alimentation en courant lorsque ladite section de détection de la vitesse de transmission détecte du bruit.
